# EUROPÄISCHE PATENTSCHRIFT

(11) **EP 3 584 140 B1**
(45) Veröffentlichungstag und Bekanntmachung des Hinweises auf die Patenterteilung: **20.07.2022**
(21) Anmeldenummer: 19176904.1
(22) Anmeldetag: 28.05.2019
(51) Int. Cl.: B62D 5/00, B62D 5/04

(54) **VERFAHREN UND VORRICHTUNG FÜR DIE STEUERUNG EINES SICHERHEITSRELEVANTEN VORGANGES, SOWIE FAHRZEUG**
VEHICLE AND METHOD AND APPARATUS FOR CONTROLLING A SAFETY-RELEVANT PROCESS
PROCÉDÉ ET DISPOSITIF DE COMMANDE D'UN PROCESSUS DE SÉCURITÉ AINSI QUE VÉHICULE

(30) Priorität: 19.06.2018 DE 102018209833
(43) Veröffentlichungstag der Anmeldung: 25.12.2019
(73) Patentinhaber: Volkswagen AG, 38440 Wolfsburg (DE)
(72) Erfinder: Sachs, Tobias, 38102 Braunschweig (DE); Schmidt-Schäfer, Sebastian, 99998 Weinbergen OT Bollstedt (DE); Schöttler, Frank, 38102 Braunschweig (DE)

(56) Entgegenhaltungen:
- EP-A1- 3 299 257
- EP-A2- 1 426 266
- WO-A1-2017/159090
- DE-A1- 10 052 343
- DE-A1- 19 946 073

## Beschreibung

In heutigen Fahrzeugen werden größtenteils elektromechanische Lenksysteme eingesetzt. Treten in der Elektronik dieser Lenksysteme im Betrieb Fehler auf, wird die Lenkunterstützung abgeschaltet oder reduziert. Der Fahrer lenkt dann das Fahrzeug mit erhöhtem Kraftaufwand.

In naher Zukunft werden autonome Fahrsysteme in den Fahrzeugen eingesetzt, die es ermöglichen, dass der Fahrer nicht mehr dauerhaft mit der Fahraufgabe beschäftigt ist und bei aktivem Fahrsystem Nebentätigkeiten (Lesen, Schlafen, Nachrichten schreiben...) durchführen kann. Der Fahrer steht dem Lenksystem deshalb nicht mehr als Rückfallebene im Fehlerfall zur Verfügung. Demnach muss das in Verbindung mit einem autonomen Fahrsystem eingesetzte Lenksystem auch nach einem Fehler noch in der Lage sein, das Fahrzeug zu führen und eine Bewegung an der Zahnstange einzustellen.

Unter autonomem Fahren (manchmal auch automatisches Fahren, automatisiertes Fahren oder pilotiertes Fahren genannt) ist die Fortbewegung von Fahrzeugen, mobilen Robotern und fahrerlosen Transportsystemen zu verstehen, die sich weitgehend autonom verhalten. Es gibt verschiedene Abstufungen des Begriffs autonomes Fahren. Dabei wird auf bestimmten Stufen auch dann von autonomem Fahren gesprochen, wenn noch ein Fahrer im Fahrzeug befindlich ist, der ggfs. nur noch die Überwachung des automatischen Fahrvorgangs übernimmt. In Europa haben die verschiedenen Verkehrsministerien (in Deutschland war die Bundesanstalt für Straßenwesen beteiligt) zusammengearbeitet und die folgenden Autonomiestufen definiert.
- Level 0: "Driver only", der Fahrer fährt selbst, lenkt, gibt Gas, bremst etc.
- Level 1: Bestimmte Assistenzsysteme helfen bei der Fahrzeugbedienung (u.a. ein Abstandsregelsystem - Automatic Cruise Control ACC).
- Level 2: Teilautomatisierung. U.a. automatisches Einparken, Spurhaltefunktion, allgemeine Längsführung, Beschleunigen, Abbremsen etc. werden von den Assistenzsystemen übernommen (u.a. Stauassistent).
- Level 3: Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert, die Führung zu übernehmen. Diese Form der Autonomie ist auf Autobahnen technisch machbar. Der Gesetzgeber arbeitet darauf hin, Level 3-Fahrzeuge zuzulassen. Die gesetzlichen Rahmenbedingungen wurden dafür bereits geschaffen.
- Level 4: Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.
- Level 5: Kein Fahrer erforderlich. Außer dem Festlegen des Ziels und dem Starten des Systems ist kein menschliches Eingreifen erforderlich.

Automatisierte Fahrfunktionen ab Stufe 3 nehmen dem Fahrer die Verantwortung für die Steuerung des Fahrzeugs ab. Ein daran beteiligtes Lenksystem, welches aufgrund eines Einzelfehlers ausfallen kann, braucht daher eine geeignete Rückfallebene, um das Fahrzeug immer in einem fahrdynamisch sicheren Zustand halten zu können bis der Fahrer wieder eingreifen kann, oder auch bei höherer Autonomiestufe bis das Fahrzeug ohne Unterstützung des Fahrers zum Stillstand kommt. Die sicherheitsrelevanten Systeme wie Bremssysteme, Fahrdynamiksysteme, Lenksysteme etc. für diese Art von Fahrzeugen, die ein automatisiertes Fahren ab Stufe 3 bieten, werden immer redundant ausgelegt. Sie bestehen dann aus zwei Steuersträngen, die beide den Steuervorgang ausführen können, sodass eine Komponente ausfallen kann, ohne die Fahrstabilität zu gefährden.

Ein Sicherheitskonzept erfordert dabei die zweifach redundante Ausführung der Lenksystemelektronik. Dabei werden bereits die Eingangssignale in das Lenkhilfe-Steuergerät zweifach zur Verfügung gestellt. Auch der Logikteil ist doppelt ausgeführt, wo eine parallele, unabhängige Signalverarbeitung stattfindet. Das betrifft auch den Leistungsteil, der ebenfalls doppelt ausgeführt ist und einen oder mehrere geeignete Elektromotoren (z.B. 6-Phasen oder 12-Phasen-Motor) ansteuert. Tritt nun in einem der beiden Teilsysteme ein Fehler auf, ist das andere Teilsystem grundsätzlich in der Lage, zumindest eine reduzierte Lenkunterstützung zur Erzeugung einer Zahnstangenbewegung bereitzustellen.

Eine Herausforderung besteht bei dieser Struktur darin, dass ein erkannter Fehler auch mit quantifizierbarer Sicherheit als solcher identifiziert werden muss. Um die Sicherheitsanforderungen zu erfüllen und zur Vermeidung ungerechtfertigter Leistungsreduzierungen und Abschaltungen ist es notwendig, dass der Fehler durch eine separate Instanz bestätigt werden muss.

Dabei soll die ordnungsgemäße Funktion des Steuergerätes überwacht werden, wie auch die ordnungsgemäße Funktion der Rotorpositionssensoren, die das reale Rotorverhalten erfassen.

Der andere Steuerstrang kommt hier jedoch nicht allein in Frage, da im Falle einer gegenteiligen Entscheidung die Wahrscheinlichkeit, dass diese Prüfung ein falsches Ergebnis geliefert hat, genauso hoch ist wie die Wahrscheinlichkeit, dass der von dem anderen Steuerstrang detektierte Fehler als fehlerhaft erkannt wurde.

Es ist also eine dritte Instanz notwendig, die in diesem Fall den Ausschlag gibt, ob der Fehler als solcher bestätigt oder nicht bestätigt wird (2 aus 3-Entscheidung). Zur Überwachung der ordnungsgemäßen Funktion der Mikrocontroller in dem Lenkhilfesteuergerät wird in einer anderen Patentanmeldung der Anmelderin eine Lösung beschrieben, die ohne Verwendung eines dritten, unabhängigen Mikroprozessors (Stand der Technik in Luft- und Raumfahrt) auskommt.

In der hier beschriebenen Patentanmeldung wird eine besonders vorteilhafte Lösung für die Überprüfung der ordnungsgemäßen Funktion der Rotorpositionssensoren angegeben.

Aus der EP 2 450 261 A2 ist eine Vorrichtung zum Ansteuern eines Elektromotors für eine Hilfskraftlenkung bekannt. Darin empfängt ein Hauptrechner die Signale von Sensoren, bereitet sie auf und gibt Steuersignale aus. Daneben ist noch ein Überwachungsrechner vorgesehen, der ebenfalls die Signale von den Sensoren empfängt und in der Lage ist, bei einem Ausfall oder Defekt des Hauptrechners an dessen Stelle zu treten.

Aus der DE 10 2016 203 090 A1 ist ein Steuergerät mit wenigstens zwei Mikrocontrollern bekannt, wobei die wenigstens zwei Mikrocontroller über wenigstens eine Ethernet-Verbindung miteinander in Kommunikationsverbindung stehen und dazu eingerichtet sind, darüber Daten auszutauschen. Insbesondere kann dadurch gewährleistet werden, dass die einzelnen Mikrocontroller auch in einem Fehlerfall miteinander kommunizieren können, beispielsweise wenn einer der Mikrocontroller einen Defekt aufweist oder wenn eine der Ethernet-Verbindungen etwa aufgrund eines Leitungsbruchs ausfällt. In einem Beispiel weist das Steuergerät vier Mikrocontroller mit jeweils zwei Prozessorkernen auf, die ringförmig miteinander verbunden sind.

Aus der DE 10 2016 205 109 A1 ist ein Mikroprozessor mit wenigstens zwei Prozessorkernen bekannt, wobei ein erster Prozessorkern dazu eingerichtet ist, die Funktionen hardwareimplementiert durch speziell konfigurierte Hardware auszuführen, und ein zweiter Prozessorkern dazu eingerichtet ist, die Funktionen softwareimplementiert durch Ausführung von Software auszuführen. Der erste Prozessorkern ist dazu eingerichtet, eine von dem zweiten Prozessorkern ausgeführte Funktion zu überwachen und/oder abzusichern. Die Überwachung beruht dabei auf dem Einsatz von redundanter Hardware.

Aus der EP 1 426 266 A2 ist ein Fahrzeug-Lenksystem nach dem "Drive By Wire"-Prinzip bekannt. Das System umfasst ein Lenkrad oder eine dazu äquivalente Lenkeinrichtung. Die Lenksystemelektronik ist entsprechend des Sicherheitskonzepts zweifach redundant ausgelegt. Dabei umfasst das System eine erste Stelleinrichtung und eine zweite Stelleinrichtung, zur Einstellung des Lenkwinkels, wobei die Stelleinrichtungen jeweils durch einen der Steuerrechner steuerbar sind. Das Dokument EP 1 426 266 A2 offenbart die Merkmale des Oberbegriffs der Ansprüche 1 und 6.

Aus dem Dokument WO 2017/159090 A1 ist ebenfalls ein elektronisches Lenksystem bekannt. Das Lenksystem ist ebenfalls redundant aufgebaut mit zwei verschiedenen Rechnern die auch die Sensorsignale von eigenen Sensoreinheiten auswerten.

Das Dokument EP 3 299 257 A1 betrifft ein elektronisches Lenksystem für Fahrzeuge. Das Lenksystem umfasst zwei Motorsysteme. Das erste System umfasst eine erste ECU in Kombination mit einer ersten Ansteuerschaltung zur Stromversorgung des ersten Motors, und das zweite System umfasst eine zweite ECU in Kombination mit einer zweiten Ansteuerschaltung zur Stromversorgung des zweiten Motors.

Das Dokument DE 199 46 073 A1 beschreibt ein System zur Steuerung von Fahrzeugkomponenten nach dem "Drive By Wire"-Prinzip. Es umfasst ferner eine erste Stelleinrichtung und eine zweite Stelleinrichtung, wobei die Stelleinrichtungen jeweils mit dem mindestens einen lenkbaren Rad mechanisch gekoppelt und jeweils durch einen von zwei Steuerrechnern steuerbar sind.

Das Dokument DE 100 52 343 A1 beschreibt ebenfalls ein Steer-by-Wire-Lenksystem, jedoch werden dabei drei Mikrorechner eingesetzt.

Die Erfindung setzt sich zur Aufgabe, eine Lösung zu finden, wie die ordnungsgemäße Funktion der Rotorpositionssensoren überprüft werden kann ohne einen dritten Rotorpositionssensor einbauen zu müssen. Die Lösung soll kostenoptimiert sein, jedoch gleichzeitig die Sicherheitsanforderungen erfüllen.

Diese Aufgabe wird durch ein Verfahren für die Steuerung eines sicherheitsrelevanten Vorgangs gemäß Anspruch 1, eine Vorrichtung zur Steuerung eines sicherheitsrelevanten Vorgangs gemäß Anspruch 6 sowie ein Fahrzeug gemäß Anspruch 8 gelöst.

Die abhängigen Ansprüche beinhalten vorteilhafte Weiterbildungen und Verbesserungen der Erfindung entsprechend der nachfolgenden Beschreibung dieser Maßnahmen.

Das Sicherheitskonzept erfordert dabei eine besondere Hardware-Architektur. Für die Steuerung des sicherheitsrelevanten Vorgangs werden wenigstens zwei Mikrocontroller eingesetzt, wobei jeder der wenigstens zwei Mikrocontroller für die Steuerung des sicherheitsrelevanten Vorgangs ausgebildet wird. Es handelt sich also um ein redundantes System. Zwischen den beiden Mikrocontrollern können mit Hilfe von entsprechenden Kommunikationsmitteln Daten ausgetauscht werden. Jeder Mikrocontroller verarbeitet die Daten wenigstens eines Sensors, der das reale Verhalten des Steuerstrangs wiederspiegelt. Das erfindungsgemäße Verfahren zur Steuerung des sicherheitsrelevanten Vorgangs zeichnet sich dadurch aus, dass in jedem Mikrocontroller ein Entscheidermodul vorgesehen wird, in dem der wenigstens eine Sensor des jeweiligen Steuerstrangs überprüft wird, wobei zur Überprüfung die Daten des jeweiligen Sensors unter den Mikrocontrollern ausgetauscht werden und miteinander verglichen werden. Zusätzlich wird in dem jeweiligen Mikrocontroller eine Modellgröße ausgehend von den Steuerungsbefehlen, die den Vorgang steuern, errechnet, die das ideale Verhalten des Steuerstrangs wiederspiegelt. In dem Entscheidermodul wird bei Erkennung einer Abweichung eine Mehrheitsentscheidung über die wenigstens drei äquivalenten Informationen den beiden Ist-Größen, die das reale Verhalten wiederspiegeln, und der Modellgröße gebildet. Diese bewirkt dann, dass die Steuerung des sicherheitsrelevanten Vorgangs durch den Mikrocontroller des Steuerstrangs, in dem der Sensor lokalisiert ist, dessen Daten von den Daten des anderen Sensors und der Modellgröße abweichen, unterbunden wird. So wird die dritte Instanz durch Berechnung der Modellgröße realisiert und es kann ein weiterer Sensor eingespart werden.

Kurz zusammengefasst wird erwähnt, dass ein Aspekt dieser Erfindung darin besteht, dass eine neue Information zur Mehrheits-Entscheidungsfindung aufgrund der mechanischen Kopplung beider Steuerstränge über ein Maschinenelement generiert wird. In einem Beispiel handelt es sich bei dem Maschinenelement um eine Rotorwelle eines Elektromotors.

Vorzugsweise wird das jeweilige Entscheidermodul auf jedem Mikrocontroller per Software installiert. Dafür ist kein zusätzlicher Hardwareaufwand erforderlich und das Entscheidermodul kann leicht auf den individuellen Steuervorgang angepasst werden.

Die Unterbindung der Steuerung des sicherheitsrelevanten Vorgangs kann in vorteilhafter Weise durch Abschaltung oder Teilabschaltung der Steuerung des sicherheitsrelevanten Vorgangs von dem Mikrocontroller selbst durchgeführt werden, in dem der Sensor lokalisiert ist, bei dem die Abweichung festgestellt wurde. Dies entspricht einer einfach zu realisierenden Variante. In einer anderen Ausführungsform kann die Ausgestaltung auch so sein, dass der andere Mikrocontroller die Abschaltung vornimmt.

Die Erfindung lässt sich für Steuerungssysteme einsetzen, bei denen Rotor-Positionssensoren eingesetzt werden können, um den Steuervorgang widerzuspiegeln. Das ist immer dann der Fall, wenn Elektromotoren angesteuert werden. Die Entscheidermodule überprüfen dann die ordnungsgemäße Funktion der Rotor-Positionssensoren, die besonderen Belastungen ausgesetzt sind.

Um das reale Verhalten des Steuerstrangs vergleichen zu können, ist erfindungsgemäß vorgesehen, dass auf jedem Mikrocontroller ein Modul, beispielsweise ein Software-Modul, zur Berechnung des realen Rotorverhaltens installiert wird, wobei dem Modul wenigstens die Daten des Rotor-Positionssensors des jeweiligen Steuerstrangs zugeführt werden.

Des Weiteren ist erfindungsgemäß vorgesehen, dass auf mindestens einem der Mikrocontroller ein Modul, beispielsweise ein Software-Modul, zur Berechnung des idealen Rotorverhaltens installiert wird, wobei dem Modul wenigstens die Daten des/der Steuerbefehls/e zugeführt werden, die an das Steuergerät für die Steuerung des Steuervorgangs übermittelt wurden. Die Steuerbefehle können als Sollvorgabe betrachtet werden und aus ihnen kann das ideale Rotorverhalten berechnet werden.

Darübar hinaus ist erfindungsgemäß vorgesehen, dass für die Bildung der Mehrheitsentscheidung in dem Entscheidermodul die Daten aus den Mikrocontroller-eigenen Modulen zur Berechnung des realen Rotorverhaltens und zur Berechnung des idealen Rotorverhaltens und wenigstens des Moduls zur Berechnung des realen Rotorverhaltens von dem wenigstens einem anderen Mikrocontroller herangezogen werden. Dies ist besonders einfach zu realisieren und erfüllt die Sicherheitsanforderungen, dass die Funktion der Rotor-Positionssensoren von einer dritten Instanz überprüft werden soll.

Der Vorschlag kann besonders für den Anwendungsfall der Steuerung eines Lenkvorgangs bei einem Fahrzeug eingesetzt werden. Solange der Fahrer noch den Lenkbefehl vorgibt, werden die Lenkbefehle zum Lenkhilfesteuergerät übertragen. Im Bereich des autonomen Fahrens werden die Lenkbefehle zukünftig ohne Zutun des Fahrers von einem weiteren Rechner zu dem Lenk-Steuergerät übertragen. Bei Steer by Wire-Systemen lenkt der Fahrer noch selbst, aber die Lenkbefehle kommen in dem Lenkhilfesteuergerät über den Kommunikationsbus an, wie im Bereich des autonomen Fahrens.

Bei dem Lenksystem besteht der Steuerungsvorgang darin, dass bestimmte Phasen eines Mehrphasen-Elektromotors für den Lenkvorgang von jedem der wenigstens zwei Mikrocontroller angesteuert werden, um eine Zahnstangenbewegung entsprechend des Lenkbefehls herbeizuführen. In einer Variante werden bestimmte Phasen eines Mehrphasen-Elektromotors für den Lenkvorgang von jedem der wenigstens zwei Mikrocontroller angesteuert und die Steuerung des Lenkvorgangs wird dann durch Trennung der Verbindung zwischen dem Mikrocontroller, der die Daten des als fehlerhaft erkannten Rotor-Positionssensors, und den zugehörigen Phasen des Mehrphasen-Elektromotors unterbunden. Dafür kann ein Phasentrenner eingesetzt werden. Dies hat den Vorteil, dass ein Teil der Lenkunterstützung erhalten bleibt und das Fahrzeug noch eine Weile mit geringerem Lenkkomfort betrieben werden kann, wenigstens bis zur Erreichung eines sicheren Zustandes, dies kann ein Parkplatz oder eine Werkstatt oder der Standstreifen oder eine "Schlangenfahrt" (zum Warnen des nachfolgenden Verkehrs) mit Bremsung bis zum Stillstand auf der aktuellen Fahrbahn sein.

Für eine entsprechende Vorrichtung für die Steuerung eines sicherheitsrelevanten Vorgangs sind die entsprechenden Maßnahmen vorteilhaft. Die Vorrichtung wird mit wenigstens zwei Mikrocontrollern redundant aufgebaut, und jeder der wenigstens zwei Mikrocontroller wird für die Steuerung des sicherheitsrelevanten Vorgangs ausgebildet. Die Vorrichtung weist einen Kommunikationsbus auf, der für den Austausch von Daten zwischen den Mikrocontrollern ausgelegt ist. Jeder Mikrocontroller verarbeitet die Daten wenigstens eines Sensors in dem jeweiligen Steuerstrang, der das reale Verhalten des Steuerstrangs wiederspiegelt. Die erfindungsgemäße Vorrichtung zeichnet sich dadurch aus, dass jeder Mikrocontroller ein Entscheidermodul aufweist zur Überprüfung des wenigstens einen Sensors des jeweiligen Steuerstrangs. In dem Entscheidermodul findet zur Überprüfung ein Vergleich der Daten des jeweiligen Sensors mit den Daten des Sensors im zweiten Strang statt, die zu dem Zweck unter den Mikrocontrollern ausgetauscht werden.

Zusätzlich wird in dem jeweiligen Mikrocontroller eine Modellgröße ausgehend von den Steuerungsbefehlen, die den Vorgang steuern, errechnet, die das ideale Verhalten des Steuerstrangs wiederspiegelt. In dem Entscheidermodul wird bei Erkennung einer Abweichung eine Mehrheitsentscheidung über die wenigstens drei äquivalenten Informationen, den beiden Ist-Größen, die das reale Verhalten wiederspiegeln, und der Modellgröße gebildet. Diese bewirkt dann, dass die Steuerung des sicherheitsrelevanten Vorgangs durch den Mikrocontroller des Steuerstrangs, in dem der Sensor lokalisiert ist, dessen Daten von den Daten des anderen Sensors und der Modellgröße abweichen, unterbunden wird. So wird die dritte Instanz durch das Software-Modul zur Berechnung der Modellgröße realisiert und es kann ein weiterer Sensor eingespart werden.

Besonders vorteilhaft lässt sich ist die Lösung für Steuerungssysteme einsetzen, bei denen Rotor-Positionssensoren eingesetzt werden, um den Steuervorgang widerzuspiegeln. Das ist immer dann der Fall, wenn Elektromotoren angesteuert werden. Die Entscheidermodule überprüfen dann die ordnungsgemäße Funktion der Rotor-Positionssensoren, die besonderen Belastungen ausgesetzt sind.

Dabei werden in einer Variante wenigstens zwei Rotor-Positionssensoren eingesetzt, jeweils einer pro Steuerstrang, dessen Daten den wenigstens zwei Mikrocontrollern zugeführt werden.

Damit die Daten mit dem modellhaften idealen Rotorverhalten vergleichbar werden, ist es vorteilhaft, wenn auf jedem Mikrocontroller ein Software-Modul zur Berechnung des realen Rotorverhaltens installiert ist, das wenigstens die Daten des Rotor-Positionssensors in dem Steuerstrang verarbeitet.

Ebenso ist es vorteilhaft, wenn auf mindestens einem der Mikrocontroller ein Software-Modul zur Berechnung des idealen Rotorverhaltens basierend auf einer Sollvorgabe installiert ist, das wenigstens die Daten der Sollvorgabe verarbeitet.

Die Vorrichtung kann vorteilhaft zur Steuerung eines Lenkvorgangs in einem Fahrzeug eingesetzt werden.

Die Erfindung kann in allen Fahrzeugen mit einer automatisierten Fahrfunktion ab Stufe 3 (nach VDA) eingesetzt werden.

Ein Ausführungsbeispiel der Erfindung ist in den Zeichnungen dargestellt und wird nachfolgend anhand der Figuren näher erläutert.

Es zeigen:
- Fig. 1: das typische Cockpit eines Fahrzeuges;
- Fig. 2: eine Gesamtansicht eines typischen Lenksystems für ein Fahrzeug;
- Fig. 3: ein Blockschaltbild der Kfz-Elektronik des Fahrzeuges;
- Fig. 4: ein Blockschaltbild eines redundant ausgelegten Lenkhilfe-Steuergerätes mit Mehrkern-Mikrocontrollern; und
- Fig. 5: ein Blockschaltbild eines redundant ausgelegten Lenkhilfe-Steuergerätes mit integriertem Zustandsbeobachter.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

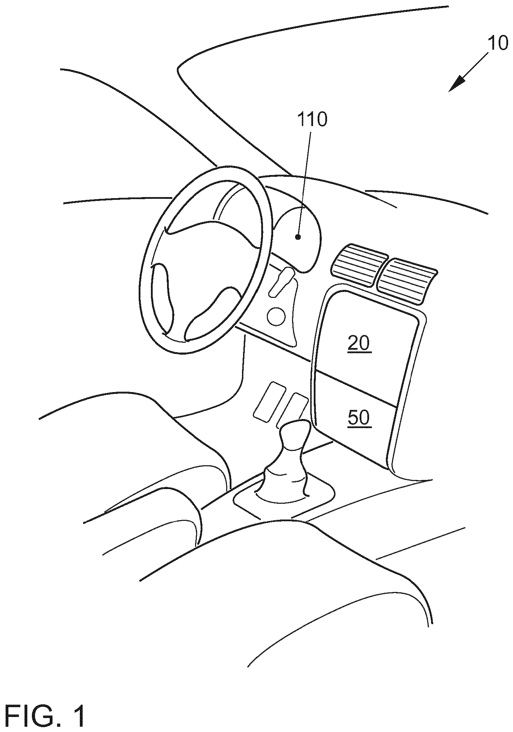

Fig. 1 zeigt das typische Cockpit eines Fahrzeuges 10. Dargestellt ist ein Personenkraftwagen Pkw. Als Fahrzeug 10 kämen allerdings beliebige andere Fahrzeuge ebenfalls in Betracht. Beispiele von weiteren Fahrzeugen sind: Busse, Nutzfahrzeuge, insbesondere Lastkraftwagen Lkw, Landmaschinen, Baumaschinen, Schienenfahrzeuge usw. Der Einsatz der Erfindung wäre allgemein bei Landfahrzeugen, Schienenfahrzeugen, Wasserfahrzeugen und Luftfahrzeugen möglich.

Die für die Erfindung wesentliche Komponente in dem Fahrzeug 10 ist das Lenksystem, von dem in dem Cockpit das Lenkrad 12 mit Teilen der Lenksäule zu sehen ist. Weiter ist in Fig. 1 eine Anzeigeeinheit eines Infotainment-Systems mit Bezugszeichen hervorgehoben. Es handelt sich um einen berührungsempfindlichen Bildschirm 20, der in der Mittelkonsole angebracht ist.

Der berührungsempfindliche Bildschirm 20 dient dabei insbesondere zur Bedienung von Funktionen des Fahrzeugs 10. Beispielsweise können darüber ein Radio, ein Navigationssystem, eine Wiedergabe von gespeicherten Musikstücken und/oder eine Klimaanlage, andere elektronische Einrichtungen oder andere Komfortfunktionen oder Applikationen des Fahrzeugs 10 gesteuert werden. Zusammengefasst wird häufig von einem "Infotainment-System" gesprochen. Ein Infotainment-System bezeichnet bei Kraftfahrzeugen, speziell Pkw, die Zusammenführung von Autoradio, Navigationssystem, Freisprecheinrichtung, Fahrerassistenzsystemen und weiterer Funktionen in einer zentralen Bedieneinheit. Der Begriff Infotainment ist ein Kofferwort, zusammengesetzt aus den Worten Information und Entertainment (Unterhaltung). Zur Bedienung des Infotainment-Systems wird hauptsächlich der berührungsempfindliche Bildschirm 20 ("Touchscreen") benutzt, wobei dieser Bildschirm 20 insbesondere von einem Fahrer des Fahrzeugs 10, aber auch von einem Beifahrer des Fahrzeugs 10 gut eingesehen und bedient werden kann. Unterhalb des Bildschirms 20 können zudem mechanische Bedienelemente, beispielsweise Tasten, Drehregler oder Kombinationen hiervon, wie beispielsweise Drückdrehregler, in einer Eingabeeinheit 50 angeordnet sein. Typischerweise ist auch eine Lenkradbedienung von Teilen des Infotainment-Systems möglich. Dafür sind die Fahrzeuge mit einer sogenannten Multifunktionslenkrad-Bedienung ausgestattet. Diese Einheit ist nicht separat dargestellt, sondern wird als Teil der Eingabeeinheit 50 betrachtet.

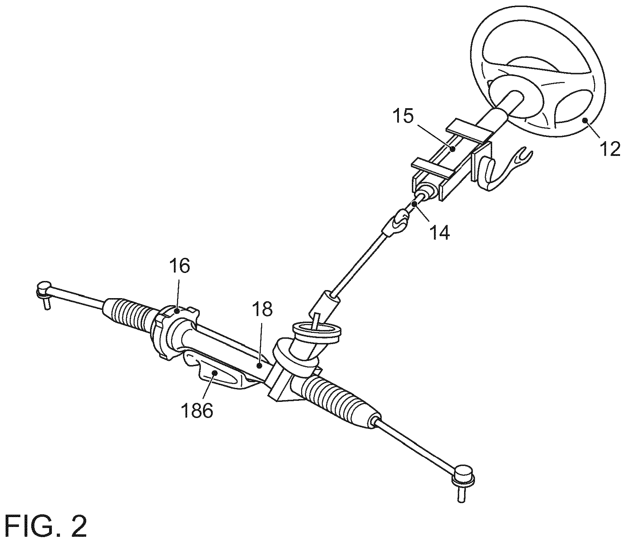

Zurück zum Lenksystem des Fahrzeuges 10. Eine Gesamtansicht des Lenksystems zeigt Fig. 2. Die wesentlichen Komponenten sind das Lenkrad 12, die Lenksäule 14, der Drehmomentsensor 15, der Elektromotor 16, die Zahnstange 18 und das Lenkhilfe-Steuergerät 186.

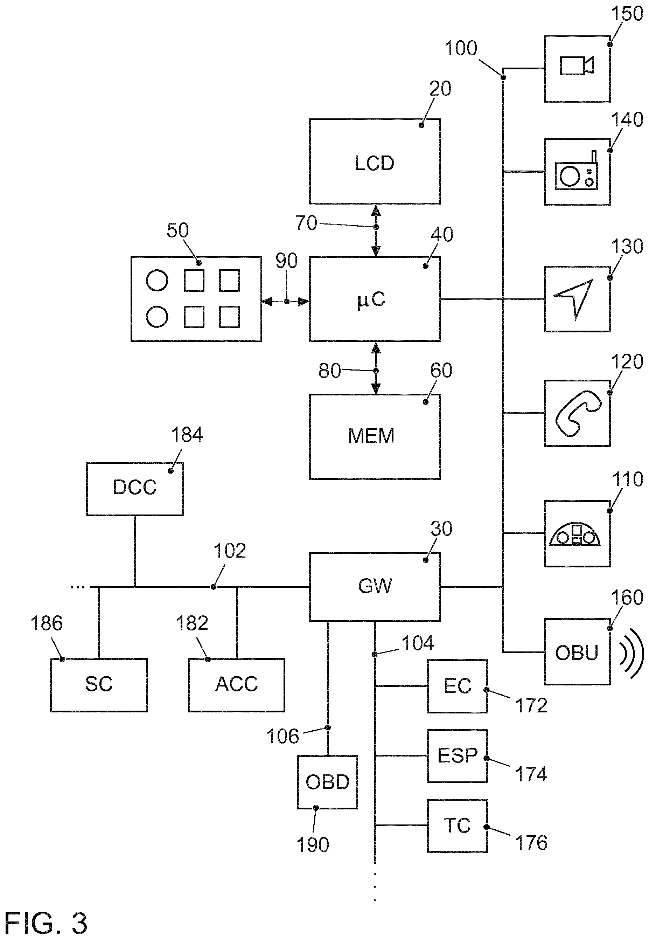

Fig. 3 zeigt schematisch ein Blockschaltbild der Kfz-Elektronik sowie beispielhaft einige Teilsysteme oder Applikationen des Infotainment-Systems. Das Infotainment-System umfasst: die berührungsempfindliche Anzeigeeinheit 20, eine Recheneinrichtung 40, eine Eingabeeinheit 50 und einen Speicher 60. Die Anzeigeeinheit 20 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 20 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 20 Steuerdaten zum Ansteuern der Anzeigefläche des Touchscreens 20 von der Recheneinrichtung 40. Über die Datenleitung 70 werden auch Steuerdaten der eingegebenen Befehle von dem Touchscreen 20 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für mögliche Einblendungen von Zusatzinformationen.

Die weiteren Teile des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie IEEE 802.03cg in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Für die drahtlose Kommunikation nach innen und außen ist das Fahrzeug 10 mit einem Kommunikationsmodul 160 ausgestattet. Dieses Modul wird oft auch als On-Board Unit bezeichnet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für die Fahrzeug-zu-Fahrzeug Kommunikation etc.

Der Kommunikationsbus 100 des Infotainment-Systems ist mit einem Gateway 30 verbunden. Daran angeschlossen sind auch die anderen Teile der Kfz-Elektronik. Zum Einen der Kommunikationsbus 104 des Antriebstrangs, der typischerweise in Form des CAN-Bus realisiert wird. Als Beispiele sind die Steuergeräte des Antriebstrangs Motorsteuergerät 172, ESP-Steuergerät 174 und Getriebesteuergerät 176 genannt und gezeigt. Weiter der Kommunikationsbus 102 für Fahrerassistenzsysteme, der in Form des FlexRay-Busses ausgebildet sein kann. Dabei sind drei Fahrerassistenzsysteme dargestellt: ein Fahrerassistenzsystem 182 zur automatischen Abstandsregelung ACC entsprechend Adaptive Cruise Control, ein Fahrerassistenzsystem DCC zur adaptiven Fahrwerksregelung 184, entsprechend Dynamic Chassis Control und ein Lenkhilfesystem 186. Weiterhin ist noch ein Kommunikationsbus 106 an das Gateway 30 angeschlossen. Dieser verbindet das Gateway 30 mit einer On-Board Diagnoseschnittstelle 190. Die Aufgabe des Gateway 30 besteht darin, die Formatumwandlungen für die verschiedenen Kommunikationssysteme 100, 102, 104, 106 zu machen, sodass untereinander Daten ausgetaucht werden können.

Im Folgenden wird genauer auf das Lenkhilfe-Steuergerät 186 eingegangen.

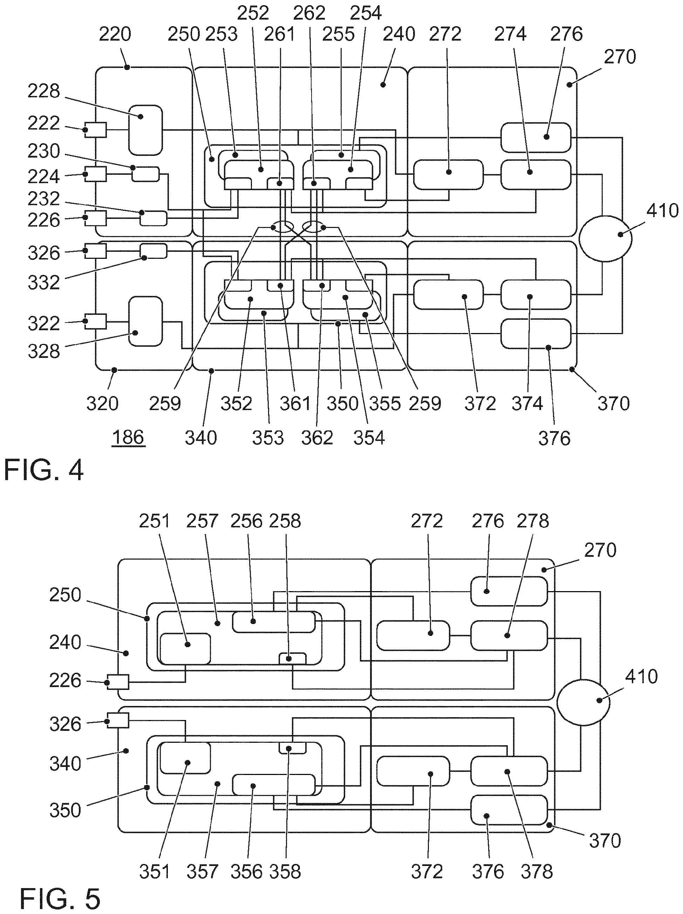

Der hardwaremäßige Aufbau ist in Fig. 4 gezeigt. Es ist, wie schon erwähnt, aus Sicherheitsgründen redundant aufgebaut. Der Lenkvorgang wird durch zwei parallele Stränge, die mit Kanal 1 und Kanal 2 bezeichnet sind, gesteuert. Dabei sind die Teile Eingangselektrik 220, 320, Logikteil 240, 340 und Leistungsteil 270, 370 jeweils doppelt vorhanden. Ebenfalls gezeigt ist der Mehrphasen-Elektromotor 410, der von dem Lenkhilfe-Steuergerät 186 angesteuert wird. Dabei wird der Elektromotor 410 zur vollen Lenkunterstützung von beiden Strängen angesteuert. Sollte in einem der beiden Stränge ein Fehler auftreten, so wird die Steuerung durch diesen Strang sicherheitshalber unterbunden. Dadurch bekommt der Fahrer keine volle Lenkunterstützung mehr, die Lenkfunktion bleibt aber durch die Steuerung des anderen Strangs insoweit noch gewährleistet, dass das Fahrzeug 10 noch sicher an den Straßenrand oder in eine Nothaltebucht oder auf einen Parkplatz gelenkt werden kann. Das System ist dabei so ausgelegt, dass der Fahrer dafür nicht eingreifen muss. Das Lenksystem kann den Lenkvorgang noch selbsttätig durchführen. Nach diesem Not-Stopp ist eine Weiterfahrt mit manueller Bedienung der Lenkung möglich.

Eine Realisierung könnte auch so gestaltet werden, dass beide Steuerungs-Stränge jeder einzeln die volle Lenkunterstützung liefern können. Damit wäre es auch möglich, dass das Fahrzeug nach einem aufgetretenen Fehler in einem Strang noch mit dem verbliebenen funktionsfähigen Strang selbsttätig die Fahrt bis "Zündung Aus" beendet. Zur Sicherheit wäre danach aber ein wiederholtes Einschalten der automatischen Fahrfunktion blockiert.

In den Eingangs-Elektrikteilen 220 und 320 befindet sich jeweils eine Filtereinheit 228 und 328, in der z.B. die Drosseln und Filter angeordnet sind, um Störungen bei der Versorgungsspannung auszugleichen. Die Versorgungsspannung steht an dem Stromanschluss 222 an. Der Kontakt 224 dient zur Verbindung mit dem Drehmomentsensor 15 des Lenksystems. Es kann zukünftig auch sein, dass beide Stränge einen eigenen Drehmomentsensor haben werden. Dieser ist an der Lenksäule 14 angebracht und wird direkt eingelesen. Zukünftig könnte ein solcher Sensor entfallen. Es werden bereits unter dem Stichwort Steer-by-Wire Lenksysteme entwickelt, die ohne mechanische Lenksäule auskommen. Von dem Drehmomentsensor 15 kommt dann die Information in das Lenkhilfe-Steuergerät 186, welche Kräfte an der Lenkung wirken. Mit dem Drehmomentsensor 15 werden typischerweise die erforderlichen Daten von Drehwinkel, Drehrichtung und Drehmoment elektronisch erfasst. Das ist wichtig, um bestimmen zu können, welche Kraft der Elektromotor 410 aufbringen muss, um den Lenkvorgang unterstützen zu können.

Dieses Eingangssignal vom Drehmomentsensor 15 wird intern an beide Mikrocontroller 250 und 350 weitergeleitet.

Es ist zu beachten, dass der Lenkprozess sehr feinfühlig gesteuert werden muss. Da spielen weitere Informationen eine wichtige Rolle, z.B. die Geschwindigkeit des Fahrzeuges. Deshalb ist jeder Mikrocontroller 250, 350 separat an den Kommunikationsbus 102 angeschlossen. Das Lenkhilfe-Steuergerät 186 hat daher zwei Bus-Anschlüsse 226 und 326 für den Fahrzeug-Bus. Auf diese Weise ist die Lenkfunktion sogar dann gewährleistet, wenn bei einem der Bus-Anschlüsse oder der Zuleitungen ein Defekt vorliegt. Die Logikteile 240 und 340 des Lenkhilfe-Steuergerätes 186 enthalten im Wesentlichen jeweils einen der beiden Mikrocontroller 250 und 350. Der Mikrocontroller 250 beinhaltet im gezeigten Beispiel die beiden Rechenkerne 252 und 254. Der Mikrocontroller 350 beinhaltet die beiden Rechenkerne 352 und 354. Die Rechenkerne eines Mikrocontrollers sind untereinander verbunden, sodass sie Daten, insbesondere Rechenergebnisse, austauschen können. Dafür wird typischerweise ein paralleler Bus entsprechend eingesetzt. Zwischen allen vier Rechenkernen 252, 254, 352, 354 der Mikrocontroller 250, 350 können ebenfalls Daten untereinander ausgetauscht werden. In einer Ausführung der Erfindung ist der Kommunikationsbus 259 zwischen den beiden Mikrocontrollern 250, 350 als Ethernet-Bus ausgeführt. In einer anderen Ausgestaltung kann er auch als FlexRay oder CAN-FD-Kommunikationsbus ausgebildet werden. Die Möglichkeit des Datenaustausches ist bei dem Sicherheitskonzept auch erforderlich, nach dem die Mikrocontroller sich gegenseitig überprüfen und bei Erkennung eines Fehlers sich gegenseitig abschalten können. Die Funktionalität der gegenseitigen Überprüfung der Mikrocontroller ist allerdings Gegenstand einer anderen Patentanmeldung, sodass auf diese Funktion hier nicht näher eingegangen wird.

In Fig. 4 ist gezeigt, dass jeder Rechenkern über zwei Kommunikations-Ports, z.B. Ethernet-Ports verfügt, über die er mit den beiden Rechenkernen des anderen Mikrocontrollers verbunden ist. Eine Besonderheit besteht noch darin, dass die Rechenkerne 252 und 352 mit sogenannten Lockstep-Rechenkernen 253 und 353 ausgestattet sind. Diese entsprechen Parallelrechnern, die das exakt gleiche Programm abarbeiten. Die Parallelschaltung dient aber nicht der Leistungssteigerung, sondern der Kontrolle. Es findet ein Vergleich der Ergebnisse der einzelnen Rechenkerne statt, der in einzelnen, zeitlich engen und nicht unterbrechbaren Schritten stattfindet. Durch die so erzielte Redundanz lassen sich hardwareseitige Ausfälle in einem der Rechenkerne detektieren und darauf reagieren, wie dies bei einem Dual-Core im Lockstep-Betrieb der Fall ist.

Auch der Leistungsteil des Lenkhilfe-Steuergerätes 186 ist parallel aufgebaut. Das Steuersignal zur Ansteuerung des Elektromotors 410 wird von dem jeweiligen Mikrocontroller 250, 350 in Form von PWM-Signalen, entsprechend "pulse width modulation", ausgegeben. Diese werden im Leistungsteil 270 und 370 in entsprechenden Umsetzer-Schaltkreisen 272, 274 und 372, 374 umgesetzt. In Fig. 4 ist der Elektromotor als 6 Phasen-Motor gezeigt. Je nachdem, welche Phasen angesteuert werden, wird also mehr oder weniger Kraft an die Zahnstange übertragen. Wenn alle Phasen angesteuert werden, wird die größte Kraft aufgebracht. Um das steuern zu können, ist pro Mikrocontroller 250, 350 ein Umsetzer-Schaltkreise 272 bzw. 372 vorgesehen. Es handelt sich um sogenannte Gate Drive Units GDU, die das PWM-Signal in entsprechende Signale zur Ansteuerung eines Verstärkers (Power MOSFET oder IGBT-Modul) umwandeln. Bevor die Ansteuersignale an den Elektromotor 410 gelangen, passieren sie noch eine Phasentrennschaltung 274 bzw. 374. Über die Phasentrennschaltungen kann jeweils eine Abschaltung der Ansteuerung des Elektromotors 410 im entsprechenden Pfad erfolgen. Entsprechend der gezeichneten Verbindungen zwischen Mikrocontrollern und Phasentrennschaltungen kann eine Abschaltung der Ansteuerung jeweils nur durch den Mikrocontroller des jeweiligen Steuerstrangs erfolgen. Für jeden Strang ist noch ein Rotor-Positionssensor 276, 376 vorgesehen. Dieser erfasst die Bewegung des Rotors des Elektromotors 410.

Wie erwähnt, verlangt das Sicherheitskonzept, dass das Lenkhilfe-Steuergerät 186 redundant aufgebaut wird. Es gibt deshalb zwei Steuerstränge, die jeweils die Steuerfunktion aufrechterhalten können. Die korrekte Funktion der beiden Mikrocontroller 250, 350 wird durch ein logisches Entscheidermodul 261, 262, 361, 362 überprüft, das über die verschiedenen Rechenkerne der Mikrocontroller 250, 350 verteilt ist. Weiterhin muss nach dem Sicherheitskonzept auch die ordnungsgemäße Funktion der Rotor-Positionssensoren 276, 376 überprüft werden. Wie das gemäß des neuen Vorschlages geschieht, darauf wird nachfolgend genauer eingegangen.

Die Fig. 5 zeigt die wesentlichen Komponenten und Module, die dafür eingesetzt werden. Gleiche Bezugszahlen bezeichnen dabei die gleichen Komponenten, wie in Fig. 4. Es sind die Logikteile 240, 340 und Leistungsteile 270, 370 der beiden Steuerstränge des Lenkhilfesteuergerätes 186 gezeigt. In den Eingangs-Elektrikteilen 220, 320 sind keine Veränderungen erforderlich, deshalb sind diese Teile nicht besonders gezeigt. Bei den Logikteilen 240, 340 sind die beiden Mikrocontroller 250 und 350 gezeigt. Die Mikrocontroller 250 und 350 können die Gleichen sein wie in Fig. 4 gezeigt. Im Unterschied ist in Fig. 5 bei den Mikrocontrollern 250, 350 jeweils ein Software-Modul gezeigt. Diese Software-Module entsprechen Zustandsbeobachtern 257, 357, die den Zweck haben, die ordnungsgemäße Funktion der Rotor-Positionssensoren 276, 376 zu überwachen. Dies geschieht wie folgt:

Die Zustandsbeobachter 257, 357 enthalten jeweils ein Software-Modul zur Bestimmung des idealen Rotorverhaltens 251, 351. Dieses Modul berechnet die erforderliche Bewegung des Rotors in Abhängigkeit von den Eingangsgrößen des Drehmomentsensors 15 oder weiterer Informationen wie den Lenkbefehl, der von einem Fahrerassistenzsystem berechnet wurde und über den Kommunikationsbus 102 zu dem Lenkhilfesteuergerät 186 übertragen wurde, und der Geschwindigkeit des Fahrzeuges, die von dem Kombiinstrument 110 zu dem Lenkhilfesteuergerät 186 übertragen wurde. Aus der Sollvorgabe in Form des Lenkbefehls wird die ideale Änderung des Rotors in dem Elektromotor 410 bestimmt. Die ideale Änderung besteht z.B. aus dem einzustellenden Rotorwinkel und der einzustellenden Rotorgeschwindigkeit oder der einzustellenden Rotorbeschleunigung. Die genaue Berechnungsart spielt für die weitere Erläuterung des Vorschlages keine entscheidende Rolle.

Wichtig ist es aber, dass der jeweilige Zustandsbeobachter noch ein weiteres Software-Modul 256, 356 beinhaltet. Dieses dient zur Bestimmung des realen Rotorverhaltens. Dazu werten diese Softwaremodule die Daten des jeweiligen Rotorpositionssensors 276, 376 und einer Komponente zu Phasenrücklesung 278, 378 aus. In dieser Komponente zur Phasenrücklesung werden die Messdaten Phasenstrom und Phasenspannung erfasst. Durch die Verwendung dieser Informationen wird die Erfassung der realen Rotorbewegung genauer. Im Prinzip könnte das reale Rotorverhalten auch ohne Phasenrücklesung bestimmt werden. Die aktuelle Rotorlage, d.h. der aktuelle Winkel des Rotors in dem verbauten Elektromotor 410, wird über den Rotorpositionssensor 276, 376 erfasst. Zwar ist die Komponente Phasentrenner in der Fig. 5 nicht mehr gesondert gezeigt, es wird aber darauf hingewiesen, dass diese Funktion in der Komponente Phasenrücklesung 278, 378 mit integriert ist.

Die ordnungsgemäße Funktion der Rotorpositionssensoren 276, 376 wird wie folgt überprüft. Dazu ist in dem Zustandsbeobachter 257 und 357 jeweils ein Entscheidermodul 258, 358 vorgesehen. In diesen Entscheidermodulen wird das von den weiteren Modulen des Zustandsbeobachters ermittelte ideale Rotorverhalten und das reale Rotorverhalten miteinander verglichen. Um eine zuverlässige Aussage treffen zu können, wird auch das reale Rotorverhalten verglichen, das von dem jeweils anderen Mikrocontroller ermittelt wurde. Dazu werden die Daten mit den ermittelten Rotorverhalten unter den Mikrocontrollern 250, 350 ausgetauscht. Damit stehen dann drei Aussagen zur Verfügung, aus denen eine Mehrheitsentscheidung gebildet werden kann. Zwei unabhängige IST-Größen und eine Modelgröße. Diese drei Informationen bilden dann die Grundlage für eine Mehrheitsentscheidung.

In dem jeweiligen Entscheidermodul 258, 358 wird jeweils eine Mehrheitsentscheidung getroffen mit den Daten des idealen Rotorverhaltens und den Daten der beiden ermittelten realen Rotorverhalten. Wenn sich ergibt, dass eine Abweichung bei einem der realen Rotorverhalten vorliegt, wird der entsprechende Strang, in dem der als fehlerhaft erkannte Rotorpositionssensor 276, 376 lokalisiert ist, abgeschaltet. Dazu besteht eine Verbindung zwischen Mikrocontroller 250, 350 und der entsprechenden Komponente Phasenrücklesung 278, 378, die auch für die Phasentrennung zuständig ist.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

Als weiteres Beispiel wird die Ausführungsform erwähnt, bei der die Steuerbefehle nicht von außen zum Steuergerät übertragen werden, sondern im Steuergerät selbst erzeugt werden.

### Bezugszeichenliste

- 10: Fahrzeug
- 12: Lenkrad
- 14: Lenksäule
- 15: Drehmomentsensor
- 16: Elektromotor
- 18: Zahnstange
- 20: berührungsempfindliche Anzeigeeinheit
- 30: Gateway
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: 1. Datenbus
- 102: 2. Datenbus
- 104: 3. Datenbus
- 106: 4. Datenbus
- 110: Kombiinstrument
- 120: Telefon
- 130: Navigationsgerät
- 140: Radio
- 150: Kamera
- 160: Kommunikationsmodul
- 172: Motorsteuergerät
- 174: ESP-Steuergerät
- 176: Getriebe-Steuergerät
- 182: Abstandsregelungs-Steuergerät
- 184: Fahrwerk-Steuergerät
- 186: Lenkhilfe-Steuergerät
- 190: On-Board Diagnosestecker
- 220: Eingangselektrik 1
- 222: Stromanschluss 1
- 224: DME 1
- 226: Kommunikationsbusanschluss 1
- 228: Filterstufe 1
- 230: Sende- und Empfangsmodul
- 232: Bus-Transceiver 1
- 240: Logikteil 1
- 250: Mikrocontroller 1
- 251: Modellgrößen-Berechnung 1
- 252: Rechenkern 1
- 253: Lockstep-Einheit 1
- 254: Rechenkern 2
- 255: Lockstep-Einheit 2
- 256: Istgrößen-Berechnung
- 258: Logische Entscheiderstufe 1
- 259: Kommunikationbus
- 261: Entscheidungsmodul 1
- 262: Entscheidungsmodul 2
- 270: Leistungsteil 1
- 272: GDU Umsetzer 1
- 274: Phasentrenner 1
- 276: Rotorpositions-Sensor 1
- 278: Phasenrücklesung 1
- 320: Eingangselektrik 2
- 322: Stromanschluss 2
- 326: Kommunikationsbusanschluss 2
- 328: Filterstufe 2
- 332: Bus-Transceiver 2
- 340: Logikteil 2
- 350: Mikrocontroller 2
- 351: Modellgrößen-Berechnung 2
- 352: Rechenkern 3
- 353: Lockstep-Einheit 3
- 354: Rechenkern 4
- 355: Lockstep-Einheit 4
- 356: Istgrößen-Berechnung 2
- 358: Logische Entscheiderstufe 2
- 361: Entscheidungsmodul 3
- 362: Entscheidungsmodul 4
- 370: Leistungsteil 2
- 372: GDU Umsetzer 2
- 374: Phasentrenner 2
- 376: Rotorpositions-Sensor 2
- 378: Phasenrücklesung 2
- 410: Mehrphasen-Elektromotor

## Patentansprüche

1. Verfahren für die Steuerung eines sicherheitsrelevanten Vorgangs, wobei für die Steuerung wenigstens zwei Mikrocontroller (250, 350) für wenigstens zwei Steuerstränge eingesetzt werden, wobei jeder der wenigstens zwei Mikrocontroller (250, 350) für die Steuerung des sicherheitsrelevanten Vorgangs ausgebildet wird, wobei jeder Mikrocontroller (250, 350) die Daten wenigstens eines Sensors (276, 376) verarbeitet, der das reale Verhalten des jeweiligen Steuerstrangs erfasst, **dadurch gekennzeichnet, dass** den wenigstens zwei Mikrocontrollern (250, 350) die Daten eines jeweils an ihn angeschlossenen Rotor-Positionssensors (276, 376) zugeführt werden, die das reale Verhalten ein- und desselben Rotors erfassen, wobei auf jedem Mikrocontroller (250, 350) ein Modul zur Berechnung des realen Rotorverhaltens (256, 356) installiert wird, wobei dem Modul (256, 356) wenigstens die Daten des ihm zugeordneten Rotor-Positionssensors (276, 376) zugeführt werden, wobei zwischen den beiden Mikrocontrollern (250, 350) die Daten des jeweiligen Sensors (276, 376) oder davon abgeleitete Daten ausgetauscht werden und in einem pro Mikrocontroller (250, 350) vorgesehenen Entscheidermodul (258, 358) überprüft wird, ob die Daten der Sensoren (276, 376) konsistent sind, und bei Erkennung einer Inkonsistenz eine Mehrheitsentscheidung gebildet wird, wobei auf mindestens einem Mikrocontroller (250, 350) ein Modul zur Berechnung des idealen Rotorverhaltens (256, 356) basierend auf einem Steuerungsbefehl als Sollvorgabe installiert wird, wobei dem Modul (256, 356) wenigstens die Daten der Sollvorgabe zugeführt werden, wobei in dem Mikrocontroller (250, 350) eine Modellgröße ausgehend von dem Steuerungsbefehl berechnet wird, wobei für die Mehrheitsentscheidung in dem jeweiligen Entscheidermodul (258, 358) die Daten aus dem Mikrocontroller-eigenen Modul zur Berechnung des realen Rotorverhaltens (256, 356) und des Moduls der Berechnung des idealen Rotorverhaltens (252, 352) und wenigstens des Moduls zur Berechnung des realen Rotorverhaltens (256, 356) von dem wenigstens einem anderen Mikrocontroller (250, 350) herangezogen werden, der Art, dass die Steuerung des sicherheitsrelevanten Vorgangs durch den Mikrocontroller (250, 350) des Steuerstrangs, dessen Daten bei der Mehrheitsentscheidung als fehlerhaft erkannt wurden, unterbunden wird.

2. Verfahren nach Anspruch 1, wobei das Entscheidermodul (258, 358) auf jedem Mikrocontroller (250, 350) per Software installiert wird.

3. Verfahren nach Anspruch 1 oder 2, wobei die Unterbindung der Steuerung des sicherheitsrelevanten Vorgangs durch Abschaltung oder Teilabschaltung der Steuerung des sicherheitsrelevanten Vorgangs von dem Mikrocontroller (250, 350) durchgeführt wird, dessen Sensor-Daten bei der Mehrheitsentscheidung als fehlerhaft erkannt wurde.

4. Verfahren nach einem der vorhergehenden Ansprüche, wobei der sicherheitsrelevante Vorgang ein Lenkvorgang für ein Fahrzeug (10) ist und die Sollvorgabe einem Lenkbefehl entspricht.

5. Verfahren nach Anspruch 4, wobei bestimmte Phasen eines Mehrphasen-Elektromotors (410) für den Lenkvorgang von jedem der wenigstens zwei Mikrocontroller (250, 350) angesteuert werden und die Steuerung des Lenkvorgangs durch Trennung der Verbindung zwischen dem Mikrocontroller (250, 350), dessen Sensor-Daten als fehlerhaft erkannt wurden, und den zugehörigen Phasen des Mehrphasen-Elektromotors (410) unterbunden wird.

6. Vorrichtung für die Steuerung eines sicherheitsrelevanten Vorgangs, wobei die Vorrichtung mit wenigstens zwei Mikrocontrollern (250, 350) redundant aufgebaut ist, sodass jeder der wenigstens zwei Mikrocontroller (250, 350) für die Steuerung des sicherheitsrelevanten Vorgangs in einem Steuerstrang ausgebildet ist, wobei der jeweilige Mikrocontroller (250, 350) die Daten wenigstens eines Sensors (276, 376) verarbeitet, der das reale Verhalten des jeweiligen Steuerstrangs erfasst, **dadurch gekennzeichnet, dass** die Vorrichtung wenigstens zwei Rotor-Positionssensoren (276, 376) aufweist, deren Daten den wenigstens zwei Mikrocontrollern (250, 350) zugeführt werden, und die beide das reale Verhalten ein- und desselben Rotors erfassen, wobei die Vorrichtung einen Kommunikationsbus (259) aufweist, der für den Austausch der Daten von den wenigstens zwei Sensoren (276, 376) zwischen den Mikrocontrollern (250, 350) ausgelegt ist, wobei auf jedem Mikrocontroller (250, 350) ein Modul zur Berechnung des realen Rotorverhaltens (256, 356) installiert ist, das wenigstens die Daten des Rotor-Positionssensors verarbeitet, wobei auf mindestens einem Mikrocontroller (250, 350) ein Modul zur Berechnung des idealen Rotorverhaltens (256, 356) basierend auf einer Sollvorgabe installiert ist, das wenigstens die Daten der Sollvorgabe verarbeitet, wobei in den wenigstens zwei Mikrocontrollern (250, 350) jeweils ein Entscheidermodul (258, 358) vorgesehen ist, in dem eine Überprüfung der Sensor-Daten auf Konsistenz erfolgt, und eine Mehrheitsentscheidung gebildet wird, in dem die Daten aus dem Mikrocontroller-eigenen Modul zur Berechnung des realen Rotorverhaltens (256, 356) und des Moduls der Berechnung des idealen Rotorverhaltens (252, 352) und wenigstens des Moduls zur Berechnung des realen Rotorverhaltens (256, 356) von dem wenigstens einem anderen Mikrocontroller (250, 350) herangezogen werden, und die Mikrocontroller (250, 350) so ausgelegt sind, dass bei Erkennung einer Inkonsistenz bei den Sensor-Daten, eine Unterbindung der Steuerung des sicherheitsrelevanten Vorgangs durch den Mikrocontroller (250, 350) des Steuerstrangs, dessen Sensor-Daten bei der Mehrheitsentscheidung als fehlerhaft erkannt wurden, erfolgt.

7. Vorrichtung nach Anspruch 6, wobei der sicherheitsrelevante Vorgang ein Lenkvorgang eines Fahrzeuges (10) ist und die Vorrichtung in einem Fahrzeug (10) eingebaut ist.

8. Fahrzeug, **dadurch gekennzeichnet, dass** das Fahrzeug (10) eine Vorrichtung nach einem der Ansprüche 6 oder 7 aufweist.

## Claims

1. Method for controlling a safety-relevant process, wherein at least two microcontrollers (250, 350) for at least two control branches are used to perform the control, wherein each of the at least two microcontrollers (250, 350) is designed for controlling the safety-relevant process, wherein each microcontroller (250, 350) processes the data from at least one sensor (276, 376), which captures the actual characteristic of the respective control branch, **characterized in that** the at least two microcontrollers (250, 350) are each supplied with the data from a rotor position sensor (276, 376) connected thereto, which detect the actual characteristic of the same rotor, wherein a module for calculating the actual rotor characteristic (256, 356) is installed on each microcontroller (250, 350), wherein the module (256, 356) is supplied with at least the data from the rotor position sensor (276, 376) assigned thereto, wherein between the two microcontrollers (250, 350) the data from the respective sensor (276, 376) or data derived therefrom are exchanged and, in a decision-making module (258, 358) which is provided per microcontroller (250, 350), it is verified whether the data from the sensors (276, 376) are consistent, and in the event of an inconsistency being detected a majority decision is made, wherein a module for calculating the ideal rotor characteristic (256, 356) based on a control command as a target specification is installed on at least one microcontroller (250, 350), wherein the module (256, 356) is supplied with at least the data of the target specification, wherein in the microcontroller (250, 350) a model value is calculated on the basis of the control command, wherein, for the majority decision in the respective decision-making module (258, 358), the data from the microcontroller-specific module for calculating the actual rotor characteristic (256, 356) and from the module for calculating the ideal rotor characteristic (252, 352) and at least of the module for calculating the actual rotor characteristic (256, 356) are used by the at least one other microcontroller (250, 350) in such a way that the control of the safety-relevant process by the microcontroller (250, 350) of the control branch, whose data were recognized as being erroneous in the majority decision, is disabled.

2. Method according to Claim 1, wherein the decision-making module (258, 358) is installed on each microcontroller (250, 350) via software.

3. Method according to Claim 1 or 2, wherein the control of the safety-relevant process is disabled by deactivating or partially deactivating the control of the safety-relevant process by the microcontroller (250, 350), whose sensor data were recognized as being erroneous in the majority decision.

4. Method according to any one of the preceding claims, wherein the safety-relevant process is a steering operation for a vehicle (10) and the target specification corresponds to a steering command.

5. Method according to Claim 4, wherein specific phases of a multi-phase electric motor (410) are activated for the steering operation by each of the at least two microcontrollers (250, 350), and the control of the steering operation is disabled by separating the connection between the microcontroller (250, 350), whose sensor data were recognized as being erroneous, and the corresponding phases of the multi-phase electric motor (410).

6. Apparatus for controlling a safety-relevant process, wherein the apparatus is redundantly designed with at least two microcontrollers (250, 350), so that each of the at least two microcontrollers (250, 350) is designed for controlling the safety-relevant process in a control branch, wherein the respective microcontroller (250, 350) processes the data from at least one sensor (276, 376), which captures the actual characteristic of the respective control branch, **characterized in that** the apparatus has at least two rotor position sensors (276, 376), the data from which are supplied to the at least two microcontrollers (250, 350) and both of which detect the actual characteristic of the same rotor, wherein the apparatus comprises a communication bus (259), which is designed for exchanging data from the at least two sensors (276, 376) between the microcontrollers (250, 350), wherein a module for calculating the actual rotor characteristic (256, 356) is installed on each microcontroller (250, 350), which processes at least the data from the rotor position sensor, wherein a module for calculating the ideal rotor characteristic (256, 356) based on a target specification is installed on at least one microcontroller (250, 350), which processes at least the data of the target specification, wherein in each of the at least two microcontrollers (250, 350) a decision-making module (258, 358) is provided, in which a review of the sensor data for consistency is carried out and a majority decision is made, in which the data from the microcontroller-specific module for calculating the actual rotor characteristic (256, 356) and from the module for calculating the ideal rotor characteristic (252, 352) and at least from the module for calculating the actual rotor characteristic (256, 356) are used by the at least one other microcontroller (250, 350), and the microcontrollers (250, 350) are designed in such a way that, when an inconsistency is detected in the sensor data, the control of the safety-relevant process by the microcontroller (250, 350) of the control branch, whose sensor data were recognized as being erroneous in the majority decision, is disabled.

7. Apparatus according to Claim 6, wherein the safety-relevant process is a steering operation of a vehicle (10) and the apparatus is installed in a vehicle (10) .

8. Vehicle, **characterized in that** the vehicle (10) has an apparatus according to either of Claims 6 and 7.

## Revendications

1. Procédé permettant de commander un processus de sécurité, dans lequel au moins deux microcontrôleurs (250, 350) sont mis en œuvre pour au moins deux branches de commande, chacun des au moins deux microcontrôleurs (250, 350) étant réalisé pour commander le processus de sécurité, chaque microcontrôleur (250, 350) traitant les données d'au moins un capteur (276, 376) qui détecte le comportement réel de la branche de commande respective, **caractérisé en ce que** les au moins deux microcontrôleurs (250, 350) reçoivent les données d'un capteur de position de rotor (276, 376) respectivement connecté à ceux-ci et qui détecte le comportement réel d'un seul et même rotor, un module de calcul du comportement de rotor réel (256, 356) étant installé sur chaque microcontrôleur (250, 350), le module (256, 356) recevant au moins les données du capteur de position de rotor (276, 376) qui lui est associé, dans lequel, entre les deux microcontrôleurs (250, 350), les données du capteur (276, 376) respectif ou des données dérivées de celles-ci sont échangées, et dans un module de décision (258, 358) prévu pour chaque microcontrôleur (250, 350), on vérifie si les données des capteurs (276, 376) sont cohérentes, et en cas d'identification d'une incohérence, une décision majorité est prise, un module de calcul du comportement de rotor idéal (256, 356) sur la base d'un ordre de commande comme spécification de consigne étant installé sur au moins un microcontrôleur (250, 350), le module (256, 356) recevant au moins les données de la spécification de consigne, une grandeur de modélisation étant calculée dans le microcontrôleur (250, 350) en partant de l'ordre de commande, dans lequel, pour la décision majoritaire, dans le module de décision respectif (258, 358), les données provenant du module propre au microcontrôleur servant à calculer le comportement de rotor réel (256, 356) et du module de calcul du comportement de rotor idéal (252, 352) et au moins du module servant à calculer le comportement de rotor réel (256, 356) du au moins un autre microcontrôleur (250, 350) sont utilisées de telle sorte que la commande du processus de sécurité par le microcontrôleur (250, 350) de la branche de commande dont les données ont été identifiées comme erronées lors de la décision majoritaire est empêchée.

2. Procédé selon la revendication 1, dans lequel le module de décision (258, 358) est installé par voie logicielle sur chaque microcontrôleur (250, 350).

3. Procédé selon la revendication 1 ou 2, dans lequel l'empêchement de la commande du processus de sécurité est effectué par la déconnexion ou la déconnexion partielle de la commande du processus de sécurité du microcontrôleur (250, 350) dont les données de capteur ont été identifiées comme erronées lors de la décision majoritaire.

4. Procédé selon l'une quelconque des revendications précédentes, dans lequel le processus de sécurité est un processus de direction pour un véhicule (10), et la spécification de consigne correspond à un ordre de direction.

5. Procédé selon la revendication 4, dans lequel certaines phases d'un moteur électrique polyphasé (410) sont excitées pour le processus de direction par chacun des au moins deux microcontrôleurs (250, 350), et la commande du processus de direction est empêchée par la séparation de la connexion entre le microcontrôleur (250, 350) dont les données de capteur ont été identifiées comme erronées et les phases associées du moteur électrique polyphasé (410).

6. Dispositif servant à commander un processus de sécurité, le dispositif étant conçu de manière redondante avec au moins deux microcontrôleurs (250, 350) de sorte que chacun des au moins deux microcontrôleurs (250, 350) est réalisé pour commander le processus de sécurité dans une branche de commande, le microcontrôleur (250, 350) respectif traitant les données d'au moins un capteur (276, 376) qui détecte le comportement réel de la branche de commande respective, **caractérisé en ce que** le dispositif présente au moins deux capteurs de position de rotor (276, 376) dont les données sont fournies auxdits au moins deux microcontrôleurs (250, 350) et qui détectent tous les deux le comportement réel d'un seul et même rotor, le dispositif présentant un bus de communication (259) qui est conçu pour l'échange des données des au moins deux capteurs (276, 376) entre les microcontrôleurs (250, 350), dans lequel, sur chaque microcontrôleur (250, 350), un module de calcul du comportement de rotor réel (256, 356) est installé qui traite au moins les données du capteur de position de rotor, dans lequel, sur au moins un microcontrôleur (250, 350), un module servant à calculer le comportement de rotor idéal (256, 356) est installé sur la base d'une spécification de consigne qui traite au moins les données de la spécification de consigne, dans lequel, dans les au moins deux microcontrôleurs (250, 350), respectivement un module de décision (258, 358) est prévu dans lequel un contrôle de cohérence des données de capteur est effectué, et une décision majoritaire est prise **en ce que** les données provenant du module propre au microcontrôleur pour calculer le comportement de rotor réel (256, 356) et du module de calcul du comportement de rotor idéal (252, 352) et au moins du module servant à calculer le comportement de rotor réel (256, 356) du au moins un autre microcontrôleur (250, 350) sont utilisées, et les microcontrôleurs (250, 350) sont conçus de telle sorte qu'en cas d'identification d'une incohérence au niveau des données de capteur, un empêchement de la commande du processus de sécurité par le microcontrôleur (250, 350) de la branche de commande dont les données ont été identifiées comme erronées lors de la décision majoritaire a lieu.

7. Dispositif selon la revendication 6, dans lequel le processus de sécurité est un processus de direction d'un véhicule (10), et le dispositif est installé sur un véhicule (10).

8. Véhicule, **caractérisé en ce que** le véhicule (10) présente un dispositif selon l'une quelconque des revendications 6 et 7.
